# EUROPÄISCHE PATENTSCHRIFT

(11) **EP 4 337 447 B1**
(45) Veröffentlichungstag und Bekanntmachung des Hinweises auf die Patenterteilung: **14.08.2024**
(21) Anmeldenummer: 22729039.2
(22) Anmeldetag: 04.05.2022
(51) Int. Cl.: B29C 48/505, B29C 48/25

(54) **EXTRUDERSCHNECKE UND VERFAHREN ZUM HERSTELLEN DERSELBEN**
SCREW EXTRUDER AND METHOD FOR PRODUCING SAME
VIS EXTRUDEUSE ET SON PROCÉDÉ DE FABRICATION

(30) Priorität: 10.05.2021 DE 102021112163
(43) Veröffentlichungstag der Anmeldung: 20.03.2024
(73) Patentinhaber: Extruder Experts GmbH & Co. KG, 52156 Monschau-Imgenbroich (DE)
(72) Erfinder: STEFFENS, Matthias, 52156 Monschau (DE); ZIMMERMANN, Dirk, 52156 Monschau (DE)
(74) Vertreter: Bauer Wagner Pellengahr Sroka
(86) Internationale Anmeldenummer: PCT/EP2022/061891
(87) Internationale Veröffentlichungsnummer: WO 2022/238186

(56) Entgegenhaltungen:
- EP-A1- 3 095 580
- CN-A- 112 622 221
- DE-A1- 102008 028 289
- JP-U- H0 539 914

## Beschreibung

Die Erfindung betrifft zunächst ein Verfahren zum Herstellen einer Extruderschnecke, wobei Schneckensegmente mit radial vorstehenden Funktionselementen zum Fördern, Mischen und/oder Kneten eines Extrudats, einer Durchgangsbohrung in einer Längsrichtung der Extruderschnecke und einer in der Längsrichtung verlaufenden inneren Passverzahnung in der Durchgangsbohrung nacheinander auf einen langgestreckten zylindrischen Zuganker aufgeschoben werden, in die Durchgangsbohrung zylindrische Koppelstücke mit einer äußeren Passverzahnung derart formschlüssig eingelegt werden, dass sie aneinander angrenzende Schneckensegmente verdrehfest verbinden und die Schneckensegmente an einer Spitze des Zugankers axial abgestützt und gegen die Spitze verspannt werden. Die Erfindung betrifft weiter eine solche Extruderschnecke.

Als Passverzahnung wird eine Längsverzahnung einer Zylinderfläche bezeichnet, wobei die Zahnflanken parallel zur Zylinderachse verlaufen und das Drehmoment zwischen Welle und Nabe übertragen. Genormte Passverzahnungen mit Evolventen-, Keil- und Kerbflanken sind besonders kostengünstig herzustellen. Aus DE 10 2015 006 479 A1 ist ein Verfahren und eine Extruderschnecke der vorstehend genannten Art mit stirnseitig jeweils zwischen zwei Schneckensegmenten auf den Zuganker aufgeschobenen längsverzahnten Koppelstücken bekannt, die in stirnseitig in die Schneckensegmente eingeformte kurze Nuten eingreifen. Gegenüber der über ihre gesamte Länge längsverzahnten Tragwelle im Hintergrund der Erfindung beispielsweise aus DE 77 01 692 U1 zeichnen sich solche Extruderschnecken durch eine preisgünstigere Herstellung und eine vereinfachte Wartung aus.

Die Herstellung der kurzen Nuten in Längsrichtung innen in den Schneckensegmenten ist technisch aber derart aufwändig und damit teuer, dass die bekannte Extruderschnecke sich am Markt nicht etablieren konnte.

DE 10 2016 011 978 A1, DE 37 14 506 A1 und EP 0 688 600 A1 schlagen im Hintergrund der Erfindung vor, Sackbohrungen in Stirnflächen der Schneckensegmente einzubringen und als Koppelstücke jeweils mehrere zylindrische Bolzen einzusetzen. DE 44 44 370 A1 schlägt vor, benachbarte Schneckensegmente durch die Stirnflächen miteinander zu verschrauben. US 2012/0135098 A1 schlägt vor, in den Stirnflächen Passfedern einzulegen. DE 10 2008 028 289 A1 schlägt vor, die Stirnflächen zu verzahnen.

### Aufgabe

Der Erfindung liegt die Aufgabe zugrunde, die Herstellung zu vereinfachen.

### Lösung

Ausgehend von dem bekannten Verfahren wird nach der Erfindung vorgeschlagen, dass die Durchgangsbohrung über ihre gesamte Länge die Passverzahnung aufweist. Die erfindungsgemäße Extruderschnecke kann mit Schneckensegmenten hergestellt werden, die zur Verwendung in Schneckenextrudern mit einstückigen längsverzahnten Tragwellen in großer Vielfalt am Markt zur Verfügung stehen. Die Erfindung vereinfacht damit signifikant die Herstellung der Extruderschnecke.

Erfindungsgemäß werden die Schneckensegmente gegen den Zuganker verspannt, die Koppelstücke weisen in der Längsrichtung ausreichend Spiel auf, um auch nach Verspannung des Zugankers eine Doppelpassung mit undefinierten Spannungszuständen in den Schneckensegmenten zu vermeiden. Bei Nutzung von Koppelstücken mit standardisierter Länge kann das Spiel mit einfachen, nicht verzahnten Rohrstücken zwischen den Koppelstücken eingestellt werden.

Vorzugsweise wird in einem erfindungsgemäßen Verfahren zuletzt ein Antriebssegment mit einer äußeren Passverzahnung aufgeschoben. Antriebssegmente mit einer zur Antriebsnabe passenden Passverzahnung sind im Stand der Technik bekannt. Das Antriebssegment kann wie ein Koppelstück mit einer äußeren Passverzahnung in ein abschließendes Schneckensegment formschlüssig eingreifen. Alternativ kann das Antriebssegment wie ein Schneckensegment mit einer inneren Passverzahnung in ein abschließendes Koppelstück eingreifen. Ein solches Antriebssegment kann als abschließendes Schneckensegment mit entsprechenden Funktionselementen zum Fördern, Mischen und/oder Kneten ausgebildet sein.

Vorzugsweise wird in einem erfindungsgemäßen Verfahren abschließend an dem der Spitze gegenüberliegenden hinteren Ende eine Spannmutter auf den Zuganker geschraubt. Der Zuganker weist in einem solchen erfindungsgemäßen Verfahren an dem hinteren Ende ein Außengewinde auf. Die Spannmutter verspannt dann mittelbar die Schneckensegmente zwischen der Spitze und der Spannmutter. Im Betrieb einer solchen Extruderschnecke ist die Spannmutter nicht mechanisch oder thermisch belastet: Sie steht nicht im Kontakt mit dem Extrudat, es bilden sich keine Ablagerungen, sie verschleißt nicht mechanisch und wird nicht aufgeheizt. Im Wartungsfall der Extruderschnecke lässt sie sich daher nach Entspannen des Zugankers leicht lösen.

Vorzugsweise weist in einem solchen erfindungsgemäßen Verfahren die Spannmutter die Passverzahnung des Antriebssegments auf. Die Spannmutter ist dann im Betrieb der Extruderschnecke durch die entsprechende Innenverzahnung des Antriebs mechanisch gesichert.

Weiter vorzugsweise wird in einem solchen erfindungsgemäßen Verfahren die Spannmutter mittels einer Ausrichthülse an der Passverzahnung des Antriebssegments ausgerichtet. Die Ausrichthülse vermeidet ein unbeabsichtigtes Verdrehen der Spannmutter, bevor eine Dehnung des Zugankers gelöst wird und die Spannmutter mittelbar die Schneckensegmente gegen die Spitze verspannt.

Vorzugsweise wird in einem erfindungsgemäßen Verfahren zum Verspannen der Schneckensegmente der Zuganker zunächst gedehnt und anschließend in dem gedehnten Zustand fixiert. Eine unbeabsichtigte Torsionsbelastung des Zugankers wird so vermieden.

Vorzugsweise wird in einem solchen erfindungsgemäßen Verfahren der Zuganker hydraulisch gedehnt. Hydraulische Presszylinder stehen variantenreich und preisgünstig zur Verfügung.

Weiter vorzugsweise wird in einem solchen erfindungsgemäßen Verfahren der Zuganker mittels der Spannmutter in dem gedehnten Zustand fixiert. Die Fixierung mittels der Spannmutter ist im Stand der Technik bekannt.

Weiter vorzugsweise wird in einem solchen erfindungsgemäßen Verfahren zum Dehnen des Zugankers eine Spannvorrichtung in der Längsrichtung an den Schneckensegmenten abgestützt. Bei Abstützung an den Schneckensegmenten ist eine zusätzliche Stützkonstruktion entbehrlich. Insbesondere kann die Spannvorrichtung mittelbar über ein Antriebssegment an den Schneckensegmenten abgestützt werden.

Nach der Erfindung wird ausgehend von der bekannten Extruderschnecke vorgeschlagen, dass die Durchgangsbohrung über ihre gesamte Länge die Passverzahnung aufweist. Die erfindungsgemäße Extruderschnecke wird in einem erfindungsgemäßen Verfahren hergestellt und zeichnet sich gleichermaßen durch dessen Vorteile aus.

Weiter weist vorzugsweise in einer solchen erfindungsgemäßen Extruderschnecke die Spitze eine der Passverzahnung der Koppelstücke entsprechende innere Passverzahnung auf. Eine solche erfindungsgemäße Extruderschnecke vermeidet wirksam ein unbeabsichtigtes Verdrehen der Spitze gegenüber den Schneckenelementen.

Erfindungsgemäße Extruderschnecken kommen in einem Einzel-, Doppel- oder Mehrschneckenextruder gleich- oder gegenläufig zum Einsatz.

### Ausführungsbeispiele

Die Erfindung wird nachfolgend anhand von Ausführungsbeispielen erläutert. Es zeigen
- Fig. 1a-f: Schritte zur Herstellung einer erfindungsgemäßen Extruderschnecke,
- Fig. 2a-c: ein erfindungsgemäßes Schneckenelement der Extruderschnecke,
- Fig. 3a/b: ein Detail der Extruderschnecke,

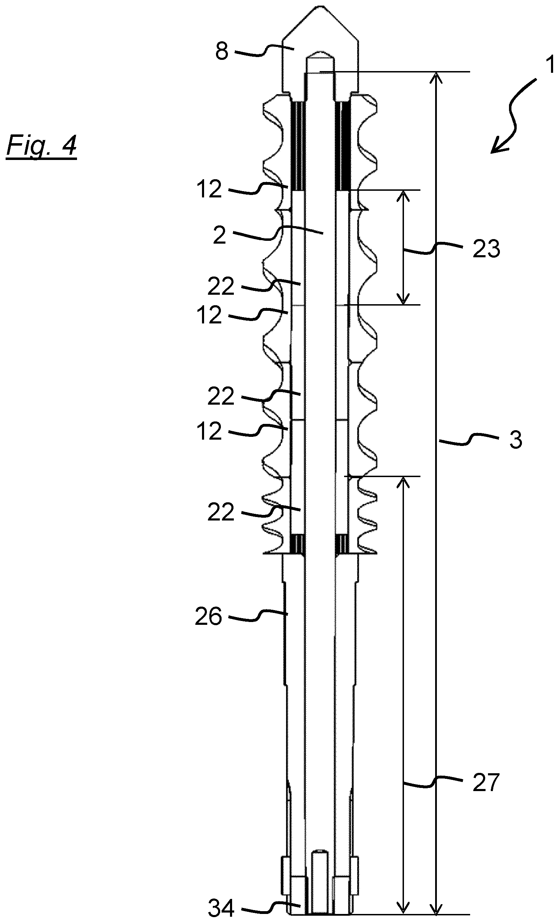

- Fig. 4: einen Längsschnitt durch die Extruderschnecke,
- Fig. 5a/b: die Extruderschnecke mit Spannvorrichtung,
- Fig. 6a/b: die Spannvorrichtung im Detail, und
- Fig. 7a/b: Schritte zur Herstellung einer weiteren erfindungsgemäßen Extruderschnecke

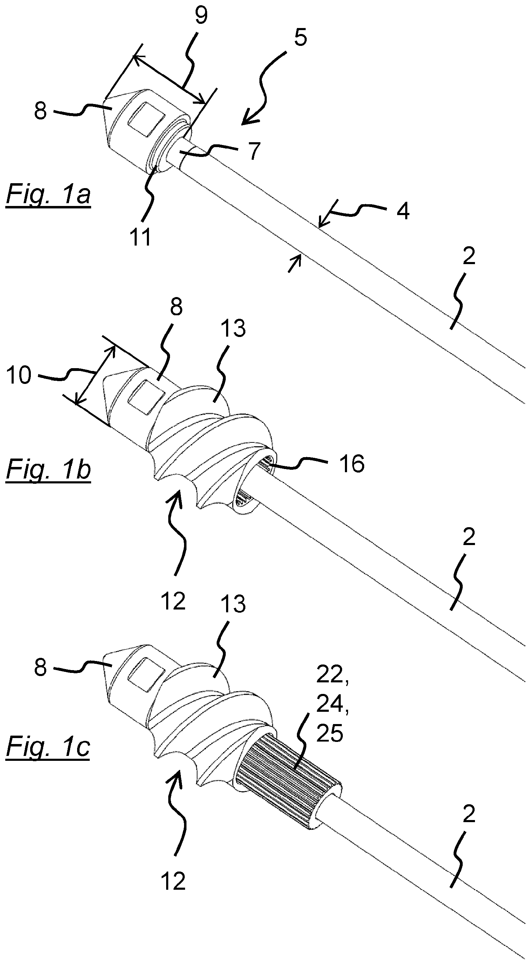

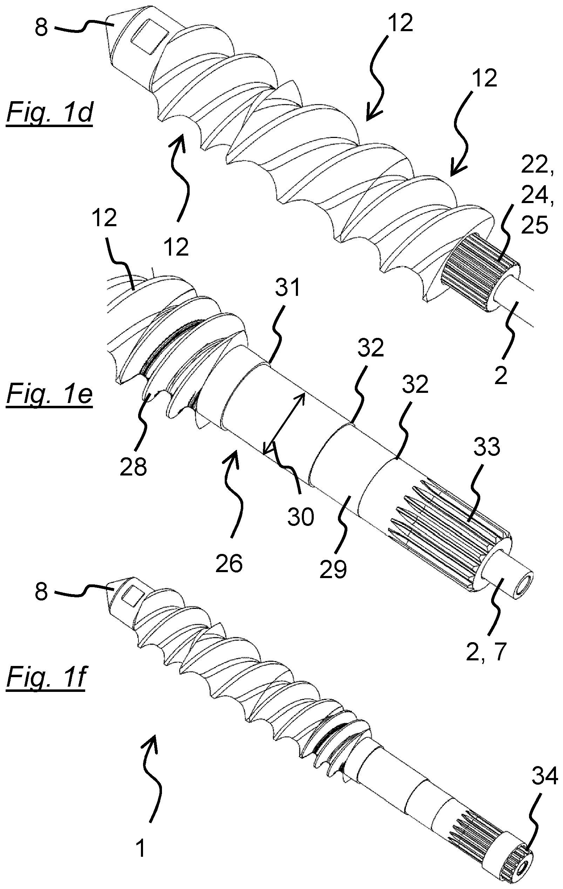

Die (erst in Figur 1f vollständig dargestellte) erfindungsgemäße Extruderschnecke 1 weist zunächst einen Zuganker 2 auf. Der Zuganker 2 besteht aus Baustahl und weist eine Länge 3 von 440 *mm,* einen Durchmesser 4 von 16,5 mm und am vorderen Ende 5 und hinteren Ende 6 jeweils ein Feingewinde 7 (M16 × 0,5) mit einer Länge von 25 *mm* auf. Wie in Figur 1a gezeigt, wird zunächst auf das vordere Ende 5 eine Spitze 8 geschraubt. Die Spitze 8 weist eine Länge 9 von 44,5 *mm,* einen Durchmesser 10 von 39 *mm* und einen axial vorstehenden Zentrierstutzen 11 auf.

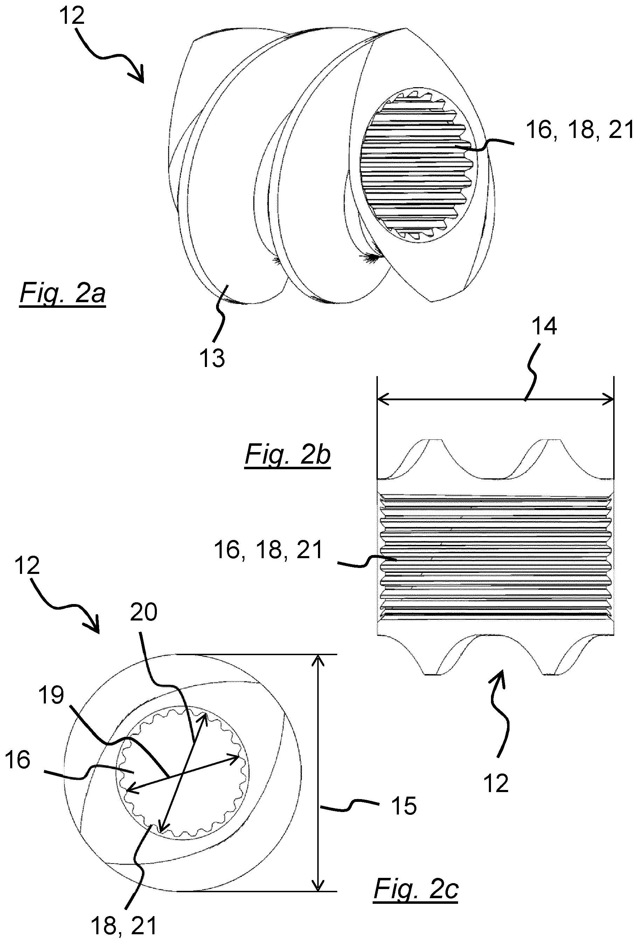

Auf den Zentrierstutzen 11 wird weiter wie in Figur 1b gezeigt ein erstes Schneckensegment 12 mit Funktionselementen 13 (hier: mit einer Schneckenwendel zum Fördern eines Extrudats mittels der Extruderschnecke 1 in einem nicht dargestellten Schneckenextruder) aufgesetzt. Das in den Figuren 2a bis 2c im Detail dargestellte Schneckensegment 12 weist eine Länge 13 und einen Durchmesser 14 von je 60 *mm* und eine Durchgangsbohrung 16 auf, die über die gesamte Länge eine Passverzahnung 18 nach DIN 5480 aufweist. Die Passverzahnung 18 weist einen inneren Kopfkreisdurchmesser 19 von 29,5 *mm,* einen äußeren Kopfkreisdurchmesser 20 von 32 *mm* und 24 Zähne 21 mit Kerbflanken auf.

Zwischen das Schneckensegment 12 und den Zuganker 2 wird wie in Figur 1c gezeigt ein rohrförmiges Koppelstück 22 eingeschoben. Das Koppelstück 22 besteht aus Baustahl und weist eine standardisierte Länge 23 von 60 *mm,* einen Innendurchmesser von 16,5 *mm,* sowie auf seiner äußeren Zylinderfläche 24 eine dem Schneckensegment 12 entsprechende Passverzahnung 25 auf.

In derselben Weise werden wie in Figur 1d dargestellt zwei weitere Schneckensegmente 12, je ein Koppelstück 22 und schließlich wie in Figur 1e dargestellt ein Antriebssegment 26 auf den Zuganker 2 geschoben. Zwischen den Koppelstücken 22 sind nicht dargestellte, nicht verzahnte Rohrstücke eingefügt, um das Spiel der Koppelstücke in Längsrichtung der Extruderschnecke 1 einzustellen.

Das Antriebssegment 26 weist auf einer Länge 27 von 209 *mm* anschließend an die Schneckensegmente 12 zunächst Funktionselemente 28 auf (hier: wiederum eine Schneckenwendel) und eine den Koppelstücken 22 entsprechende innere Passverzahnung und daran anschließend ein Rohr 29 mit einem Innendurchmesser von 16,5 *mm* und einem Außendurchmesser 30, der sich von 39,6 *mm* in drei Stufen 31, 32 auf 34,3 *mm* vermindert und in einer äußeren Passverzahnung 33 endet.

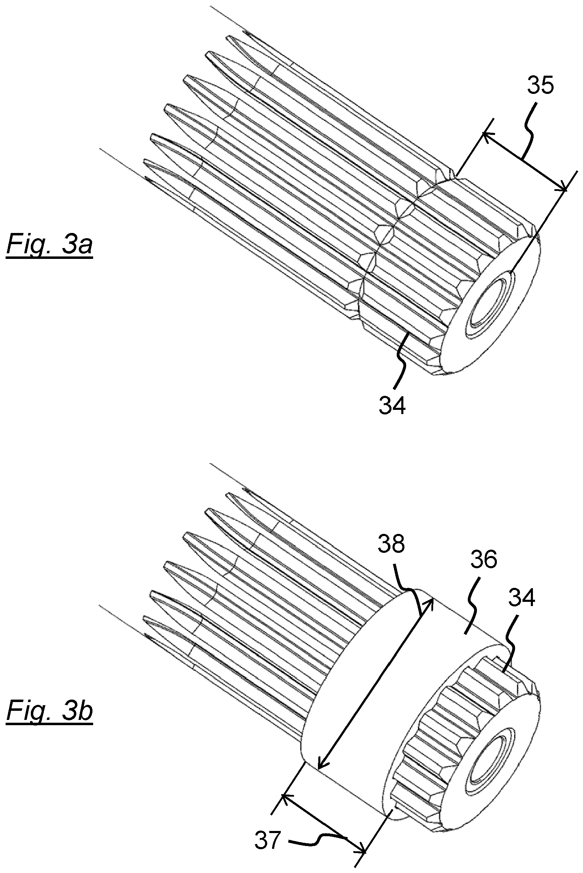

Auf das Feingewinde 7 am hinteren Ende 6 des Zugankers 2 wird wie in Figur 1f sowie im Detail in den Figuren 3a und 3b dargestellt eine Spannmutter 34 mit einer Länge 35 von 20 *mm* aufgeschraubt, die die äußere Passverzahnung 33 des Antriebssegments 26 aufweist. Die Vormontage abschließend wird eine Ausrichthülse 36 mit einer Länge 37 von 20 *mm* und einem Außendurchmesser 38 von 39,5 *mm* über die Spannmutter 34 und das Antriebssegment 26 geschoben. Die Ausrichthülse 36 weist eine der Passverzahnung 18 entsprechende Innenverzahnung auf und vermeidet so ein Verdrehen der Spannmutter 34 gegenüber der Ausrichthülse 36.

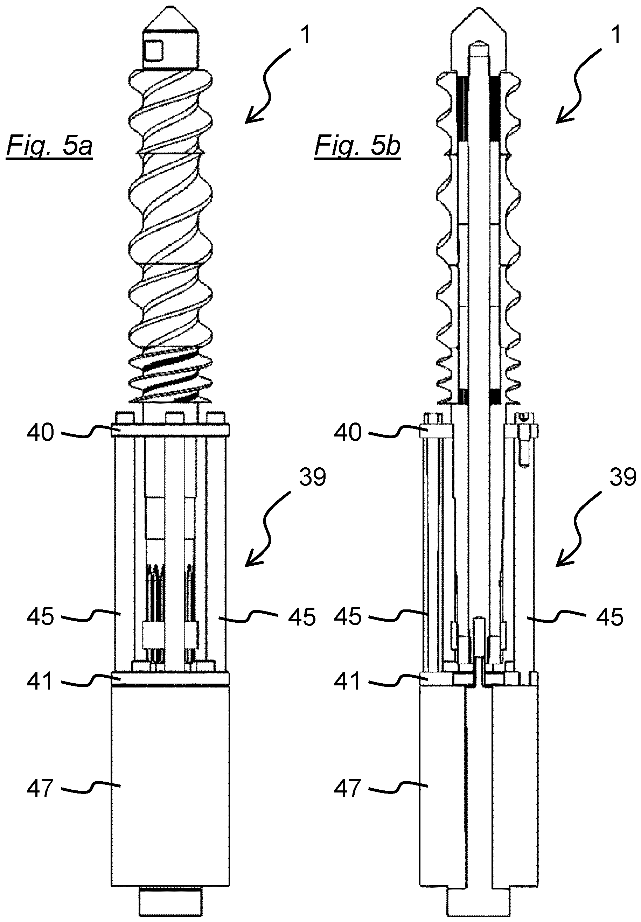

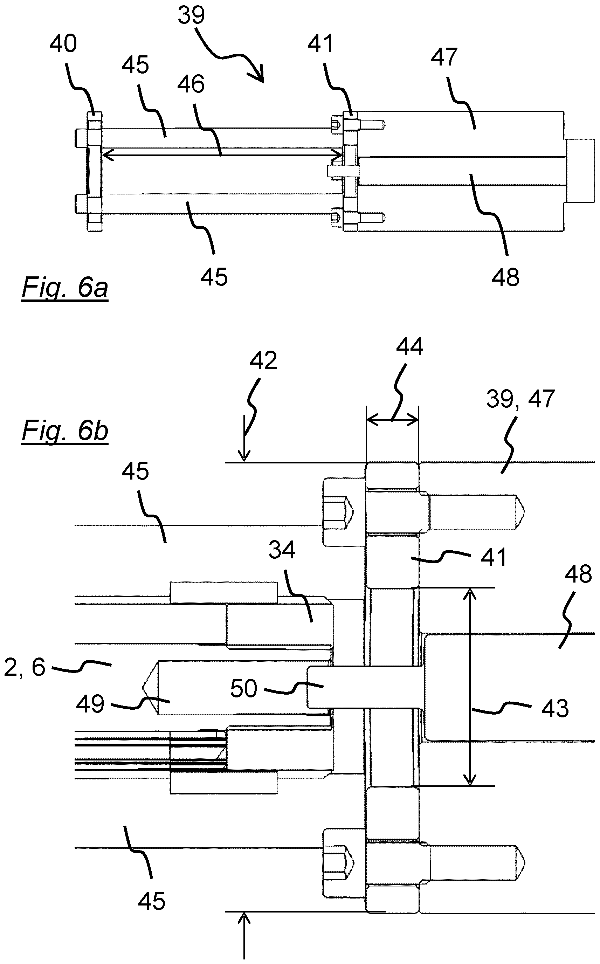

Zum Spannen des Zugankers 2 wird an der vormontierten Extruderschnecke 1 wie in den Figuren 5a/b dargestellt eine Spannvorrichtung 39 angebracht. Die Spannvorrichtung 39 ist in den Figuren 6a/b im Detail dargestellt.

Die Spannvorrichtung 39 weist zwei kreisringförmige Stützringe 40, 41 mit einem äußeren Durchmesser 42 von 85 *mm,* einem inneren Durchmesser 43 von 38 *mm* und einer Dicke 44 von 10 *mm* auf, die von vier Stützstäben 45 in einem Abstand 46 von 170 *mm* gehalten werden. Der vordere Stützring 40 wird an der ersten Stufe 31 des Antriebssegments 26 und dadurch mittelbar an den Schneckensegmenten 12 abgestützt. An dem hinteren Stützring 41 ist ein hydraulischer Hohlkolbenzylinder 47 angebracht.

Um einen Kolben 48 des Hohlkolbenzylinders 47 mit dem Zuganker 2 zu verbinden, weist das hintere Ende 6 des Zugankers 2 eine Bohrung 49 mit einem nicht dargestellten Innengewinde M10 auf, in das ein Zapfen 50 des Kolbens 48 eingeschraubt wird. Dann wird der Zuganker 2 mittels des Kolbens 48 mit einer Last von 40 *kN* aus der Extruderschnecke 1 herausgezogen.

In der gelängten Stellung wird die Ausrichthülse 36 so weit auf das Antriebssegment 26 verschoben, dass sie die Spannmutter 34 freigibt. Dann wird die Spannmutter 34 handfest angezogen und mittels der Ausrichthülse 36 erneut gesichert. Nun kann der Kolben 48 entlastet und die Spannvorrichtung 39 demontiert werden.

Bei einer Wartung der Extruderschnecke 1 nach einer vorgegeben Betriebsdauer kann die Spannung des Zugankers 2 in derselben Weise nachjustiert werden, bei Beschädigung oder Abnutzung im Betrieb kann die Extruderschnecke 1 leicht demontiert werden, um einzelne Schneckenelemente zu ersetzen.

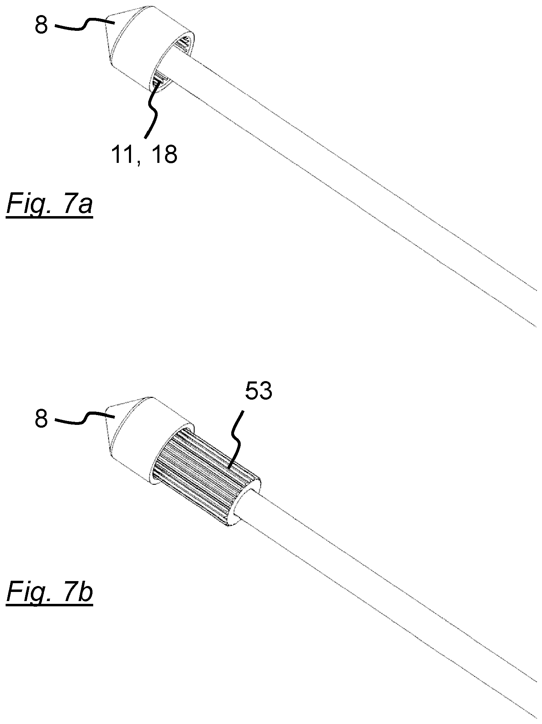

Eine nicht dargestellte weitere erfindungsgemäße Extruderschnecke entspricht der ersten Extruderschnecke 1, wobei abweichend wie in den Figuren 7a und 7b gezeigt die Spitze 51 anstelle des Zentrierstutzens 11 eine Sackbohrung 52 mit der Passverzahnung 18 aufweist, in die zunächst ein Koppelstück 53 eingeschoben wird.

### In den Figuren sind

- 1: Extruderschnecke
- 2: Zuganker
- 3: Länge
- 4: Durchmesser
- 5: vorderes Ende
- 6: hinteres Ende
- 7: Feingewinde
- 8: Spitze
- 9: Länge
- 10: Durchmesser
- 11: Zentrierstutzen
- 12: Schneckensegment
- 13: Funktionselement
- 14: Länge
- 15: Durchmesser
- 16: Durchgangsbohrung
- 18: Passverzahnung
- 19: innerer Kopfkreisdurchmesser
- 20: äußerer Kopfkreisdurchmesser
- 21: Zahn
- 22: Koppelstück
- 23: Länge
- 24: Zylinderfläche
- 25: Passverzahnung
- 26: Antriebssegment
- 27: Länge
- 28: Funktionselement
- 29: Rohr
- 30: Außendurchmesser
- 31: Stufe
- 32: Stufe
- 33: Passverzahnung
- 34: Spannmutter
- 35: Länge
- 36: Ausrichthülse
- 37: Länge
- 38: Außendurchmesser
- 39: Spannvorrichtung
- 40: Stützring
- 41: Stützring
- 42: äußerer Durchmesser
- 43: innerer Durchmesser
- 44: Dicke
- 45: Stützstab
- 46: Abstand
- 47: Hohlkolbenzylinder
- 48: Kolben
- 49: Bohrung
- 50: Zapfen
- 51: Spitze
- 52: Sackbohrung
- 53: Koppelstück

## Patentansprüche

1. Verfahren zum Herstellen einer Extruderschnecke (1), wobei
a. Schneckensegmente (12) mit
i. radial vorstehenden Funktionselementen (13) zum Fördern, Mischen und/oder Kneten eines Extrudats,
ii. einer Durchgangsbohrung (16) in einer Längsrichtung der Extruderschnecke (1) und
iii. einer in der Längsrichtung verlaufenden inneren Passverzahnung (18) in der Durchgangsbohrung (16) nacheinander auf einen langgestreckten zylindrischen Zuganker (2) aufgeschoben werden,
b. in die Durchgangsbohrung (16) zylindrische Koppelstücke (22, 53) mit einer äußeren Passverzahnung (25) derart formschlüssig eingelegt werden, dass sie aneinander angrenzende Schneckensegmente (12) verdrehfest verbinden und
c. die Schneckensegmente (12) an einer Spitze (8, 51) des Zugankers (2) axial abgestützt und gegen die Spitze (8, 51) verspannt werden,
wobei die Durchgangsbohrung (16) über ihre gesamte Länge die Passverzahnung (18) aufweist.

2. Verfahren nach dem vorgenannten Anspruch, ***dadurch gekennzeichnet, dass*** zuletzt ein Antriebssegment (26) mit einer äußeren Passverzahnung (33) aufgeschoben wird.

3. Verfahren nach einem der vorgenannten Ansprüche, ***dadurch gekennzeichnet, dass*** abschließend eine Spannmutter (34) auf den Zuganker (2) geschraubt wird.

4. Verfahren nach den Ansprüchen 2 und 3, ***dadurch gekennzeichnet, dass*** die Spannmutter (34) die Passverzahnung (33) des Antriebssegments (26) aufweist.

5. Verfahren nach dem vorgenannten Anspruch, ***dadurch gekennzeichnet, dass*** die Spannmutter (34) mittels einer Ausrichthülse (36) an der Passverzahnung (33) ausgerichtet wird.

6. Verfahren nach einem der vorgenannten Ansprüche, ***dadurch gekennzeichnet,* dass** zum Verspannen der Schneckensegmente (12) der Zuganker (2) zunächst vorzugsweise hydraulisch gedehnt und anschließend in dem gedehnten Zustand fixiert wird, vorzugsweise mittels der Spannmutter (34) gemäß Anspruch 3.

7. Verfahren nach dem vorgenannten Anspruch, ***dadurch gekennzeichnet, dass*** zum Dehnen des Zugankers (2) eine Spannvorrichtung (39) in der Längsrichtung an den Schneckensegmenten (12) abgestützt wird.

8. Extruderschnecke (1) mit
a. einem langgestreckten zylindrischen Zuganker (2),
b. Schneckensegmenten (12), die
i. radial vorstehende Funktionselemente (13) zum Fördern, Mischen und/oder Kneten eines Extrudats
ii. eine Durchgangsbohrung (16) in einer Längsrichtung der Extruderschnecke (1), und
iii. eine in der Längsrichtung verlaufende innere Passverzahnung (18) in der Durchgangsbohrung (16) aufweisen und an einer Spitze (8, 51) des Zugankers (2) axial abgestützt und gegen die Spitze (8, 51) verspannt sind,
**gekennzeichnet durch**
c. zylindrische Koppelstücke (22, 53) mit einer äußeren Passverzahnung (25), die in die Durchgangsbohrung (16) derart formschlüssig eingelegt sind, dass sie aneinander angrenzende Schneckensegmente (12) verdrehfest verbinden,
wobei die Durchgangsbohrung (16) über ihre gesamte Länge die Passverzahnung (18) aufweist.

9. Extruderschnecke nach dem vorgenannten Anspruch, ***dadurch gekennzeichnet, dass*** die Spitze (51) die innere Passverzahnung (18) aufweist.

10. Schneckenextruder mit einer oder mehreren Extruderschnecken (1) nach dem vorgenannten Anspruch.

## Claims

1. A method for producing an extruder screw, the method comprising:
a. sequentially sliding screw segments onto a tensioned longitudinally extending cylindrical tension rod, the screw segments including:
i. radially protruding functional elements configured to feed, mix and/or knead an extrudate,
ii. a through bore oriented in a longitudinal direction of the extruder screw, and
iii. an inner spline extending in the through bore in the longitudinal direction of the extruder screw;
b. inserting cylindrical coupling pieces including an outer coupling piece spline into the through bore with positive form locking so that the cylindrical coupling pieces connect adjacent screw segments torque proof; and
c. axially supporting the screw segments at a tip of the tension rod and clamping the screw segments against the tip of the tension rod,
wherein the inner spline extends over an entire length of the through bore.

2. The method according to the preceding claim, further comprising: sliding a drive segment including an outer drive segment spline onto the tension rod.

3. The method according to any of the preceding claims, further comprising:
threading a clamping nut onto the tension rod as a last step.

4. The method according to claims 2 and 3, wherein an outer clamping nut spline of the clamping nut corresponds to the outer drive segment spline of the drive segment.

5. The method according to the preceding claim, wherein the clamping nut is aligned at the outer drive segment spline by an alignment sleeve.

6. The method according to any of the preceding claims, further comprising:
hydraulically tensioning the tension rod; and
subsequently fixing the tension rod by the clamping nut in a tensioned condition of the tension rod so that the screw segments are clamped.

7. The method according to the preceding claim, further comprising: supporting a clamping device in the longitudinal direction at the screw segments so that the tension rod is tensioned.

8. An extruder screw, comprising:
a.) a longitudinally extending cylindrical tension rod;
b.) screw segments including:
i.) radially protruding functional elements configured to feed, mix and/or knead an extrudate,
ii.) a through bore oriented in the longitudinal direction of the extruder screw (1), and
iii.) an inner spline extending in the through bore in the longitudinal direction of the extruder screw,
wherein the screw segments are axially supported at a tip of the tension rod and clamped against the tip of the tension rod;
**characterized by** cylindrical coupling pieces including an outer coupling piece spline inserted into the through bore with positive form locking so that the cylindrical coupling pieces connect adjacent screw segments torque proof,
wherein the inner spline extends over an entire length of the through bore.

9. The extruder screw according to the preceding claim, wherein the tip includes the inner spline.

10. A screw extruder, comprising: at least one extruder screw according to claim 9.

## Revendications

1. Procédé de fabrication d'une vis d'extrudeuse (1), sachant que
a. des segments de vis (12) avec
i. des éléments fonctionnels en saillie radiale (13) pour transporter, mélanger et/ou malaxer un extrudat,
ii. un trou de passage (16) dans une direction longitudinale de la vis d'extrudeuse (1), et
iii. une denture d'adaptation (18) intérieure dans le trou de passage (16), passant dans la direction longitudinale,
sont enfilés les uns derrière les autres sur un tirant d'ancrage (2) cylindrique allongé,
b. des pièces d'accouplement (22, 53) cylindriques avec une denture d'adaptation extérieure (25) sont introduites par conformité de forme dans le trou de passage (16) de telle manière qu'elles relient solidaires en rotation les segments de vis (12) voisins les uns des autres, et
c. les segments de vis (12) sont axialement soutenus sur une pointe (8, 51) du tirant d'ancrage (2) et sont serrés contre la pointe (8, 51),
sachant que le trou de passage (16) comporte la denture d'adaptation (18) sur toute sa longueur.

2. Procédé selon la revendication précédente, **caractérisé en ce qu'**un segment d'entraînement (26) avec une denture d'adaptation extérieure (33) est enfilé en dernier lieu.

3. Procédé selon l'une quelconque des revendications précédentes, **caractérisé en ce qu'**un écrou de serrage (34) est vissé en fermeture sur le tirant d'ancrage (2) .

4. Procédé selon les revendications 2 et 3, **caractérisé en ce que** l'écrou de serrage (34) comporte la denture d'adaptation (33) du segment d'entraînement (26).

5. Procédé selon la revendication précédente, **caractérisé en ce que** l'écrou de serrage (34) est orienté sur la denture d'adaptation (33) au moyen d'un manchon d'orientation (36).

6. Procédé selon l'une quelconque des revendications précédentes, **caractérisé en ce que** pour serrer les segments de vis (12), le tirant d'ancrage (2) est d'abord allongé de préférence de façon hydraulique et est ensuite fixé à l'état allongé, de préférence au moyen de l'écrou de serrage (34) selon la revendication 3.

7. Procédé selon la revendication précédente, **caractérisé en ce que** pour allonger le tirant d'ancrage (2), un dispositif de serrage (39) est appuyé dans la direction longitudinale sur les segments de vis (12).

8. Vis d'extrudeuse (1) avec
a. un tirant d'ancrage cylindrique allongé (2),
b. des segments de vis (12), qui comportent
i. des éléments fonctionnels (13) en saillie radiale pour transporter, mélanger et/ou malaxer un extrudat,
ii. un trou de passage (16) dans une direction longitudinale de la vis d'extrudeuse (1), et
iii. une denture d'adaptation intérieure (18) passant dans la direction longitudinale dans le trou de passage (16) et sont axialement appuyés sur une pointe (8, 51) du tirant d'ancrage (2) et serrés contre la pointe (8, 51),
**caractérisée par**
c. des pièces d'accouplement cylindriques (22, 53) avec une denture d'adaptation extérieure (25), qui sont introduites par conformité de forme dans le trou de passage (16) de telle manière qu'elles relient fixes en rotation les segments de vis (12) adjacents les uns aux autres,
sachant que le trou de passage (16) comporte la denture d'adaptation (18) sur toute sa longueur.

9. Vis d'extrudeuse selon la revendication précédente, **caractérisée en ce que** la pointe (51) comporte la denture d'adaptation intérieure (18).

10. Vis d'extrudeuse avec une ou plusieurs vis d'extrudeuse (1) selon la revendication précédente.
